# EUROPÄISCHE PATENTANMELDUNG

(11) **EP 1 916 080 A2**
(43) Veröffentlichungstag der Anmeldung: **30.04.2008**
(21) Anmeldenummer: 07013227.9
(22) Anmeldetag: 06.07.2007
(51) Int. Cl.: B28B 3/02, B28B 11/08, B28B 11/04

(54) **Verfahren zur Formgestaltung von Betonsteinen und/oder Betonplatten**

(30) Priorität: 27.10.2006 DE 102006050754
(71) Anmelder: METTEN Stein + Design GmbH & Co. KG, 51491 Overath (DE)
(72) Erfinder: Metten, Hans-Josef, 51467 Bergisch Gladbach (DE)
(74) Vertreter: Nau, Walter

(57) **Zusammenfassung**

Verfahren zur Formgestaltung von Betonsteinen und/oder Betonplatten verschiedener Formate und Größen, wobei die Formgestaltung in mit Beton gefüllten Formen, der mit oder ohne zusätzlichem Vorsatzbeton versehen ist, und der Stein- oder Plattenoberfläche entsprechenden Stempeln oder Matrizen mit Ausnehmungen oder Vorsprüngen zum Prägen der Oberflächen erfolgt und die Betonsteine oder Betonplatten im Anschluss daran vor dem Erstarren entformt werden und extern aushärten, wobei in einem nachgeschalteten Arbeitsgang die Oberflächen weiter bearbeitet werden,
wobei die Ausnehmungen Nuten mit parallelen, schrägen, ebenen oder gebogenen Wänden und oder Böden und die Vorsprüngen Zahnstreifen mit parallelen, schrägen, ebenen oder gebogenen Wänden und/oder Erhebungen sind,
wobei die Nuten oder Zahnstreifen sich über die ganze Oberfläche der Stempel und folglich der Betonsteine oder Betonplatten erstrecken und
wobei im nachgeschalteten Arbeitsgang die Oberflächen mittels Flüssigkeiten oder Festkörpern gestrahlt werden.

## Beschreibung

Die Erfindung bezieht sich auf ein Verfahren zur Formgestaltung von Betonsteinen und/oder Betonplatten verschiedener Formate und Größen gemäß dem Oberbegriff der Patentansprüche 1, 10, 11 oder 12.

Durch die gattungsbildende EP- 0 319 972 B1 ist ein Verfahren zum Herstellen und/oder Behandeln von Betonsteinen bekannt. Bei diesem Dokument haben die Stempel Ausnehmungen oder Vorsprünge, die über die Fläche der Stempel wahllos verteilt sind und eine reziproke Oberfläche an den Betonsteinen bilden.
In einem nachgeschalteten Arbeitsgang werden die Oberflächen und ggf. auch die Kanten der Betonsteine von losen Teilen befreit und zusätzlich aufgeraut oder beschädigt.
Durch das bekannte Verfahren entstehen Betonsteine oder Betonplatten, die eine raue Oberfläche mit kleinen Unebenheiten aufweisen, die aber keine geriffelte und scharrierte Struktur haben.

Es ist weiterhin ein Verfahren und eine Vorrichtung zum künstlichen Altern von Betonsteinen bekannt, DE- 36 21 276 A1, bei der ausgehärtete Betonsteine oder -platten mittels eines meißelartigen Schlagwerkzeuges bearbeitet werden, so dass eine unregelmäßig bearbeitete Oberfläche entsteht.

Aufgabe der vorliegenden Erfindung ist es daher, das gattungsbildende Verfahren so zu verändern bzw. zu verbessern, dass Strukturen auf den Oberflächen der Betonsteine oder Betonplatten nach Art einer Riffelung oder Scharrierung erzeugt werden können. Dabei soll die Oberfläche auch trittsicher und rutschfest sein, um Unfälle zu vermeiden.

Die Aufgabe der Erfindung wird durch die kennzeichnenden Merkmale der Patentansprüche 1, 10, 11 oder 12 gelöst.
Durch die auf den Stempeln oder Matrizen angebrachten Nuten oder Zahnstreifen werden im Wesentlichen reziproke Nuten und Zahnstreifen auf den Oberflächen der Betonsteine oder Betonplatten aufgebracht oder eingeprägt. Dadurch, dass die Wände und/oder Böden und/oder Erhebungen der Nuten oder Zahnstreifen parallel zueinander, schräg zueinander, eben oder auch gebogen ausgeführt sind, entstehen auf den Betonsteinen oder Betonplatten Nuten oder Zahnstreifen mit verschiedenen Flanken-, Böden oder Erhebungsformen. Die Nuten oder Zahnstreifen erstrecken sich über die ganze Oberfläche der Betonsteine oder Betonplatten, vorzugsweise in einer regelmäßigen Struktur, so dass die Oberfläche eine Scharrierung oder Riffelung, also eine besondere Struktur erhält.
In dem nachgeschalteten Arbeitsgang werden die Oberflächen mittels Flüssigkeiten oder Festkörpern gestrahlt.
Die Nachbearbeitung mittels Flüssigkeit, die überwiegend Wasser enthält, erfolgt vorzugsweise vor dem Aushärten der Oberflächen der Betonsteine oder Betonplatten. Die Nachbearbeitung mittels Festkörper erfolgt nach dem Aushärten, da die Beanspruchung der Oberfläche wesentlich intensiver ist, so dass bei Bearbeitung vor dem Aushärten eine zu starke Beschädigung der Oberfläche entstehen könnte. Die Festkörper sind vorzugsweise Stahlkugeln, da diese eine glatte Oberfläche aufweisen und die Betonsteine und Betonplatten intensiv aber nicht rau bearbeiten.

Die Nachbearbeitung durch Flüssigkeiten und Festkörper erfolgt mittels Strahlen, die z.B. durch Düsen erzeugt werden. Dabei können mehrere winklig zueinander angeordnete Strahlen vorgesehen sein. Sie können ungleichmäßig zu der Oberfläche der Betonsteine oder zueinander bewegt werden. Die Flüssigkeiten oder Festkörper können auch ungleichmäßig zugeführt werden. Schließlich können auch die Betonsteine oder Betonplatten während der Nachbearbeitung ungleichförmig/ungleichmäßig bewegt werden. Durch die Nachbearbeitung durch Flüssigkeiten und/oder Festkörper wird auch erreicht, dass die Oberflächen trittsicherer und rutschfester werden.

Gemäß einem veränderten Vorschlag der Erfindung wird an Stelle der Bearbeitung mittels Flüssigkeiten oder Festkörper vorgeschlagen, die Oberflächen der Betonsteine oder Betonplatten und damit die Enderhebungen der Zahnstreifen oder Erhebungen **planzuschleifen,** u. zwar soviel, dass die Enderbebungen oder Erhebungen kleine ebene Flächen aufweisen. Dadurch wird, abgesehen von dem veränderten optischen Eindruck eine Trittfläche mit vermehrten Kanten und Drainagenuten erzeugt. Insbesondere bei einer geschliffenen Oberfläche in Verbindung mit einer schmutzhemmenden Beschichtung, die in einem anderen Anspruch definiert ist, sind die Zahnstreifen und Nuten eine wirksame Maßnahme zur Erhöhung der Trittsicherheit.
Einem anderen Vorschlag der Erfindung gemäß wird statt der Prägung der Nuten diese nach dem Pressen der Betonsteine oder Betonplatten in die Oberflächen eingefräst. Danach werden die Oberflächen, wie zuvor beschrieben, vorzugsweise geschliffen.

Es sei ausdrücklich darauf hingewiesen, dass die Oberflächen, wie ebenfalls bereits beschrieben, auch gestrahlt werden können. Dadurch erhöht sich die Trittsicherheit und/oder Rutschfestigkeit, insbesondere in Verbindung mit dem Aufbringen der beschriebenen Beschichtung.

In weiterer Ausgestaltung der Erfindung wird vorgeschlagen, dass die Nuten oder Zahnstreifen parallel zueinander ausgerichtet sind. Sie verlaufen vorzugsweise geradlinig und parallel zu einer Kante der Betonsteine oder Betonplatten, wobei sowohl die Längskante als auch die Querkante als Startlinie verwendet werden kann. Die Nuten oder Zahnstreifen können auch schräg zu einer der Kanten verlaufen und die Oberflächen der Betonsteine oder Betonplatten diagonal riffeln oder scharrieren.
Da die Nuten oder Zahnstreifen beliebig auf den Stempeln angebracht werden können, können auch beliebige Formen oder Strukturen auf den Oberflächen der Betonsteine oder Betonplatten erzeugt werden, wobei auch ein Fischgrätenmuster möglich ist.
Der Querschnitt der Nuten oder Zahnstreifen kann im Querschnitt gesehen beliebige Formen aufweisen, wobei abgesehen von rechteckigen, dreieckigen Querschnitten mit geraden oder gebogenen Wänden auch teilkreisförmige Querschnitte möglich sind.

Zur weiteren Erläuterung der Erfindung wird auf die Zeichnungen verwiesen, in denen Ausführungsbeispiele der Erfindung vereinfacht dargestellt sind.

Es zeigen:
- Figur 1:: eine perspektivische Ansicht einer Betonplatte mit geriffelter /scharrierter Oberfläche,
- Figur 2:: eine Seitenansicht der Platte gemäß Figur 1,
- Figur 3:: eine perspektivische Ansicht einer Betonplatte gemäß Figur 1 mit schräg verlaufender Riffelung
- Figur 4:: eine perspektivische Ansicht einer Betonplatte mit geriffelter /scharrierter Oberfläche, wobei die Enderhebungen plan geschliffen sind und
- Figur 5:: eine Seitenansicht der Platte gemäß Figur 4.

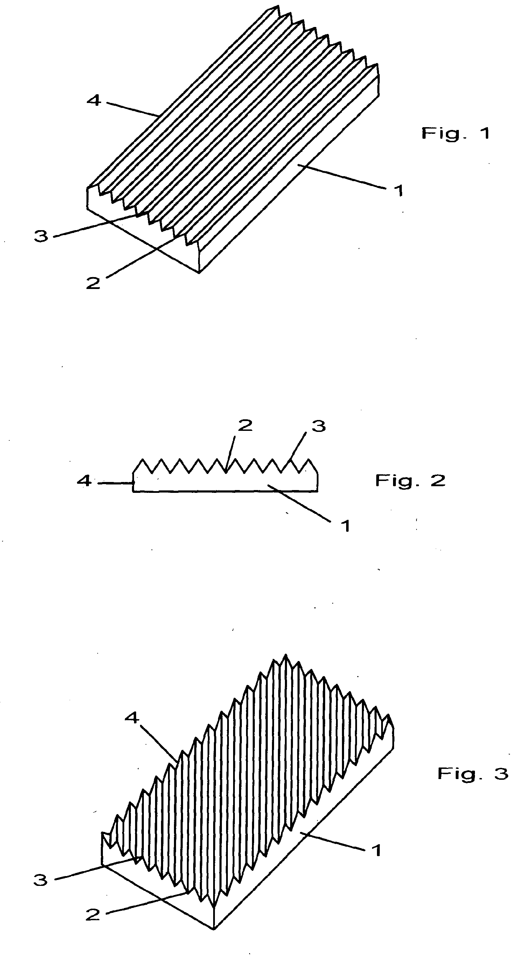

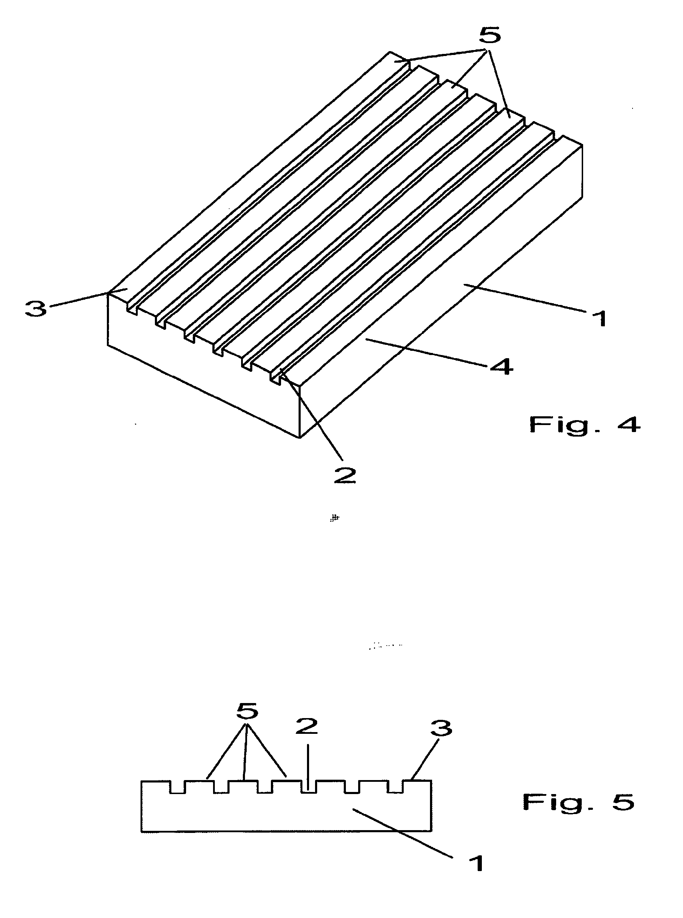

In den Figuren 1 bis 5 ist, soweit im Einzelnen dargestellt, mit 1 eine Betonplatte bezeichnet, die eine Längs- und eine Quererstreckung aufweist und rechteckig ausgeführt ist. Die Betonplatte wurde mittels eines der beschriebenen Verfahren zur Formgestaltung hergestellt, wobei der der Betonplatte zugeordnete Stempel oder die Matrize in der entsprechenden Bearbeitungsanlage Nuten und Zahnstreifen aufweist, die zu entsprechenden Nuten 2 und Zahnstreifen 3 auf der Oberfläche der Betonplatte 1 führen. Die Platten 1 können aber auch durch Stempel mit ebener Fläche hergestellt werden, wobei die Nuten 2 durch eine Fräsbearbeitung hergestellt sind. Entsprechend der Anordnung der Nuten und Zahnstreifen auf den Stempeln können die Nuten 2 und Zahnstreifen 3 auf der Betonplatte 1 beliebige Formen und Ausgestaltungen aufweisen. Die Nuten 2 und Zahnstreifen 3 der Betonplatte gemäß den Figuren 1 und 2 sind parallel zu einer Längskante 4 der Betonplatte 1 aufgerichtet, während die Nuten 2 und Zahnstreifen 3 auf der Oberfläche der Betonplatte 1 gemäß Figur 3 schräg ausgeführt sind. Wie in den Figuren 4 und 5 dargestellt können die mit 5 bezeichneten Enderhebungen der Zahnstreifen 3 plan geschliffen sein.

Es sei ausdrücklich darauf hingewiesen, dass die Enderhebungen 5 aber auch durch entsprechende ebene Streifen und Zahnstreifen am Stempel oder durch eine ebene Fläche des Stempels und Fräsen der Nuten 2, ohne Planschleifvorgang, hergestellt sein können.

Die Oberflächen der Betonsteine oder Betonplatten können im frischen oder ausgehärteten Zustand zusätzlich mit einem Veredelungsmittel, das z. B. Acrylat, Lack oder dergl. enthält, bearbeitet werden, wodurch eine Oberfläche erzielt wird, die eine Reduzierung bzw. Verhinderung der Schmutzaufnahme aufweist und eine Farbintensivierung und Verbesserung der Farbbeständigkeit sowie eine leichte Reinigung bewirkt

### Bezugszeichenliste

- 1: Betonplatte
- 2: Nuten
- 3: Zahnstreifen
- 4: Längskante
- 5: Enderhebungen

## Patentansprüche

1. Verfahren zur Formgestaltung von Betonsteinen und/oder Betonplatten (1) verschiedener Formate und Größen, wobei die Formgestaltung in mit Beton gefüllten Formen, der mit oder ohne zusätzlichem Vorsatzbeton versehen ist, und der Stein- oder Plattenoberfläche entsprechenden Stempeln oder Matrizen mit Ausnehmungen oder Vorsprüngen zum Prägen der Oberflächen erfolgt und die Betonsteine oder Betonplatten (1) im Anschluss daran vor dem Erstarren entformt werden und extern aushärten und wobei in einem nachgeschalteten Arbeitsgang die Oberflächen weiter bearbeitet werden,
**dadurch gekennzeichnet, dass** die Ausnehmungen Nuten mit parallelen, schrägen, ebenen oder gebogenen Wänden und/oder Böden und die Vorsprüngen Zahnstreifen mit parallelen, schrägen, ebenen oder gebogenen Wänden und/oder Erhebungen sind,
dass die Nuten und/oder Zahnstreifen sich über die ganze Oberfläche der Stempel und folglich der Betonsteine oder Betonplatten (1) erstrecken und
dass im nachgeschalteten Arbeitsgang die Oberflächen mittels Flüssigkeiten oder Festkörpern gestrahlt werden.

2. Verfahren zur Formgestaltung nach Anspruch 1,
**dadurch gekennzeichnet, dass** die Nachbearbeitung mittels Flüssigkeit vor dem Aushärten der Betonsteine oder Betonplatten (1) erfolgt.

3. Verfahren zur Formgestaltung nach Anspruch 1,
**dadurch gekennzeichnet, dass** die Nachbearbeitung mittels Festkörpern nach dem Aushärten der Betonsteine oder Betonplatten (1) erfolgt.

4. Verfahren zur Formgestaltung nach einem der vorhergehenden Ansprüche,
**dadurch gekennzeichnet, dass** die Flüssigkeit überwiegend Wasser enthält.

5. Verfahren zur Formgestaltung nach einem der vorhergehenden Ansprüche,
**dadurch gekennzeichnet, dass** die Festkörper vorzugsweise Stahlkugeln sind.

6. Verfahren zur Formgestaltung nach einem der vorhergehenden Ansprüche,
**dadurch gekennzeichnet, dass** die Nachbearbeitung durch Flüssigkeiten und Festkörper mittels Strahlen erfolgt, die vorzugsweise winklig zueinander ausgerichtet sind.

7. Verfahren zur Formgestaltung nach einem der vorhergehenden Ansprüche,
**dadurch gekennzeichnet, dass** die Strahlen ungleichmäßig zu den Betonsteinen oder Betonplatten (1) oder zueinander bewegt werden.

8. Verfahren zur Formgestaltung nach einem der vorhergehenden Ansprüche,
**dadurch gekennzeichnet, dass** das Strahlmaterial ungleichmäßig zugeführt wird.

9. Verfahren zur Formgestaltung nach einem der vorhergehenden Ansprüche,
**dadurch gekennzeichnet, dass** die Betonsteine oder Betonplatten (1) während der Nachbearbeitung ungleichförmig/ungleichmäßig bewegt werden.

10. Verfahren zur Formgestaltung von Betonsteinen und/oder Betonplatten (1) verschiedener Formate und Größen, wobei die Formgestaltung in mit Beton gefüllten Formen, der mit oder ohne zusätzlichem Vorsatzbeton versehen ist, und der Stein- oder Plattenoberfläche entsprechenden Stempeln oder Matrizen mit Ausnehmungen oder Vorsprüngen zum Prägen der Oberflächen erfolgt und die Betonsteine oder Betonplatten (1) im Anschluss daran vor dem Erstarren entformt werden und extern aushärten und wobei in einem nachgeschalteten Arbeitsgang die Oberflächen weiter bearbeitet werden,
**dadurch gekennzeichnet, dass** die Ausnehmungen Nuten mit parallelen, schrägen, ebenen oder gebogenen Wänden und/oder Böden und die Vorsprüngen Zahnstreifen mit parallelen, schrägen, ebenen oder gebogenen Wänden und/oder Erhebungen sind,
dass die Nuten und/oder Zahnstreifen sich über die ganze Oberfläche der Stempel und folglich der Betonsteine oder Betonplatten (1) erstrecken und
dass im nachgeschalteten Arbeitsgang die Oberflächen der Betonsteine und/oder Betonplatten (1) und damit die Enderhebungen (5) der Zahnstreifen (3) und/oder Erhebungen in einem Planschleifvorgang abgeflacht werden.

11. Verfahren zur Formgestaltung von Betonsteinen und/oder Betonplatten (1) verschiedener Formate und Größen, wobei die Formgestaltung in mit Beton gefüllten Formen, der mit oder ohne zusätzlichem Vorsatzbeton versehen ist, und der Stein- oder Plattenoberfläche entsprechenden Stempeln erfolgt und die Betonsteine oder Betonplatten (1) im Anschluss daran vor dem Erstarren entformt werden und extern aushärten und wobei in einem nachgeschalteten Arbeitsgang die Oberflächen weiter bearbeitet werden,
**dadurch gekennzeichnet, dass** an den Oberflächen Nuten (2) mit parallelen, schrägen, ebenen oder gebogenen Wänden und/oder Böden und Zahnstreifen (3) mit parallelen, schrägen, ebenen oder gebogenen Wänden und/oder Erhebungen vorgesehen sind,
dass die Nuten (2) und/oder Zahnstreifen (3) sich über die ganze Oberfläche der Betonsteine oder Betonplatten (1) erstrecken und mittels einer Fräsbearbeitung hergestellt sind und
dass danach die Oberflächen der Betonsteine und/oder Betonplatten (1) und damit die Enderhebungen (5) der Zahnstreifen (3) und/oder Erhebungen in einem Planschleifvorgang abgeflacht werden.

12. Verfahren zur Formgestaltung von Betonsteinen und/oder Betonplatten (1) verschiedener Formate und Größen, wobei die Formgestaltung in mit Beton gefüllten Formen, der mit oder ohne zusätzlichem Vorsatzbeton versehen ist, und der Stein- oder Plattenoberfläche entsprechenden Stempeln erfolgt und die Betonsteine oder Betonplatten (1) im Anschluss daran vor dem Erstarren entformt werden und extern aushärten und wobei in einem nachgeschalteten Arbeitsgang die Oberflächen weiter bearbeitet werden,
**dadurch gekennzeichnet, dass** an den Oberflächen Nuten (2) mit parallelen, schrägen, ebenen oder gebogenen Wänden und/oder Böden und Zahnstreifen (3) mit parallelen, schrägen, ebenen oder gebogenen Wänden und/oder Erhebungen vorgesehen sind,
dass die Nuten (2) und/oder Zahnstreifen (3) sich über die ganze Oberfläche der Betonsteine oder Betonplatten (1) erstrecken und mittels einer Fräsbearbeitung hergestellt sind und
dass im nachgeschalteten Arbeitsgang die Oberflächen mittels Flüssigkeiten oder Festkörpern gestrahlt werden.

13. Verfahren zur Formgestaltung nach einem der Ansprüche 1, 10, 11 oder 12,
**dadurch gekennzeichnet, dass** die Nuten(2) oder Zahnstreifen (3) der Betonsteinen und/oder Betonplatten (1) parallel zueinander ausgerichtet sind.

14. Verfahren zur Formgestaltung nach Anspruch 1, 10, 11 oder 12,
**dadurch gekennzeichnet, dass** die Nuten (2) oder Zahnstreifen (3) der Betonsteinen und/oder Betonplatten (1) geradlinig verlaufen und parallel zu einer Kante, vorzugsweise der Längskante (4), oder parallel zu der anderen Kante, vorzugsweise der Querkante, oder schräg zu einer Kante eines Betonsteins oder einer Betonplatte (1) verlaufen.

15. Verfahren zur Formgestaltung nach einem der vorhergehenden Ansprüche,
**dadurch gekennzeichnet, dass** die Nuten (2) oder Zahnstreifen (3) der Betonsteinen und/oder Betonplatten (1) Riffelungen bilden.

16. Verfahren zur Formgestaltung nach einem der vorhergehenden Ansprüche,
**dadurch gekennzeichnet, dass** die Nuten (2) oder Zahnstreifen (3) der Betonsteinen und/oder Betonplatten (1) im Querschnitt gesehen Rechtecke, Dreiecke, Bögen oder Doppelbögen aufweisen.

17. Betonsteine und/oder Betonplatten (1), die durch das Verfahren zur Formgestaltung nach einem der auf Anspruch 1 bezogenen Ansprüche hergestellt sind,
**dadurch gekennzeichnet, dass** die Betonsteine oder Betonplatten (1) auf ihrer Oberfläche Nuten (2) und/oder Zahnstreifen (3) aufweisen, die reziprok zu den Nuten und/oder Zahnstreifen an den Stempeln oder Matrizen entsprechend den Patentansprüchen 13 bis 15 ausgebildet sind.

18. Betonsteine und/oder Betonplatten (1), die durch das Verfahren zur Formgestaltung nach einem der auf Anspruch 10 oder 11 bezogenen Ansprüche hergestellt sind,
**dadurch gekennzeichnet, dass** die Betonsteine oder Betonplatten (1) auf ihrer Oberfläche Nuten (2) und/oder Zahnstreifen (3) aufweisen, die entsprechend den Patentansprüchen 13 bis 16 ausgebildet sind, wobei die Enderhebungen der Zahnstreifen abgeflacht sind.

19. Betonsteine und/oder Betonplatten (1) nach Anspruch 14,
**dadurch gekennzeichnet, dass** die Oberflächen der Betonsteine oder Betonplatten (1) im frischen oder ausgehärteten Zustand mit einem Veredelungsmittel, das z. B. Acrylat, Lack oder dergl. enthält, bearbeitet sind.
